# EUROPEAN PATENT APPLICATION

(11) **EP 2 199 626 A1**
(43) Date of publication of application: **23.06.2010**
(21) Application number: 09386035.1
(22) Date of filing: 09.12.2009
(51) Int. Cl.: F16B 12/52, F16B 12/40

(54) **Method for joining tubular parts with an internal connection knot**

(30) Priority: 19.12.2008 GR 20080100808
(71) Applicant: Papapanagiotou, Athanasios, 62121 Serres (GR)
(72) Inventor: Papapanagiotou, Athanasios, 62121 Serres (GR)

(57) **Abstract**

The invention relates to a method of connecting metal tubular parts with a connection knot (2) for forming tables, desks and like structures.
The connection knot (2) has a «Y» or «T» shape whereby the legs together with two semi-circular identical parts (6) form spigots for insertion into the tubular parts (4,3). The leg of the connection knot is curved to be screwed to a capping member (1) which in turn is inserted in a further tubular part (8) perpendicular to the plane of the connection knot.

## Description

The invention refers to the conjunction method concerning metal tubular parts with internal connecting knot in shape «Y» or «T» (design 3.2). The invention is consisted of one part in shape «Y» or «T», two same parts, caps in semicircle shape. All the parts are inter connected and also connected with other tubular spare parts (designs 3.1, 3.3, 3.4, 3.6, 3.8).

The invention is an innovation in the field of the connection of metal tubular parts for industrial uses (i.e. frames of metal desks or of other industrial products).

Till now, many different ways are known concerning the connection of metal tubular parts, some of which are based on the method of spot welding but without the possibility of disassembly. Others are based on the method of support through screws, but this method can lead to the screws and the slots to be apparent in the connecting points minimizing the aesthetic result.

The advantage of the specific invention is that offers an accurate and easy assembly and disassembly of the frame, which can be also knocked down.
Moreover, the Conjunction - Knot, because of the way it is assembled, has its screwing points not apparent, so that the aesthetic result is not affected by the view of screws, slots etc.

The Conjunction - Knot, according to the present invention, has the characteristic that the assembly is not succeeded through spot welding, is knocked down, since the connection is succeeded through screws (design 3.5, 3.7) and offers perfect accuracy. The support points are not apparent, giving a harmonic sequence of the knot with the metal spare parts and offer a perfect aesthetic result without screws and slots (design 3.5, 3.7). This method allows the easy connection of the surfaces and tubular spare parts, but also the possibility of connecting anodised tubular spare parts under a perfect technical and aesthetical result.

It is offered in multiple colours similar to those of the tubular spare parts, offering chromatic harmony to the synthesis. The Conjunction - Knot in shape «Y» or «T» (design 3.2) can be used in different tube diameters, like conjunction of tubular spare parts, for the frame of desks or tables but for many other industrial constructions as well.
Design 1 and 2 presents an application in desk frame, which is consisted of the conjunction - knot in shape "Y" (design 3.2) and metal tubular spare parts.
Design 3 presents the axonometric pattern of assembling the above frame.
Design 4 and 5 presents in detail the two sides of the knot.
Design 6 and 7 presents an application in a frame desk, which is consisted of the conjunction -knot "T" and of metal tubular spare parts (design 6.2 - 7.2).
Design 8 presents the axonometric pattern of assembling the above frame.
Design 9 and 10 presents in detail the two sides of the knot.

In all the designs number 1 is a metal spare, which is placed internally to the metal tube number 8. The metal tube number 8 is the support leg of the desk.

The number 2 is a part of the knot in shape «Y» or «T».

Number 6 caps in semicircle shape are the two parts of the knot, which are placed in the bottom of the part in shape «Y» or «T».

Conjunction - Knot in shape «Y» is consisted of: one part in shape «Y» (design 2), two parts of the same, caps, in semicircular shape (design 6) and one part, Base Cap (design 1) in diametric cross section.

The inter connection is succeeded as following: the part (Base - Cap) design 1, is placed on the internal cross section of the metal tube (design 8), where is perfectly osculated. It has two holes with screw thread in its cross line part. The same part creates the acumination of the tube (cap). Following, the part in shape «Y» (design 2) is incorporated, placed exactly on the external diameter of the metal tube and screwed internally on the part (Base - Cap) (design 1 and 5).

Following, the two same parts are added (design 6) on the part in shape «Y» (design 2), creating the internal cross section of the metal tube in every side of the angle «Y». After the placement of the metal tubes, the screws are screwed (design 7). These screws have the advantage that are screwed on the part (design 6), against the part (design 2) and as result pushes the part against the metal tube (design 4).

Based on this method, the steady support of three metal tubes is succeeded with no apparent screws. The synthesis is knocked down and is not permanent or welded. Under the same method, the knot in shape «T» is constructed, while it can be used in tubes of different diameter.

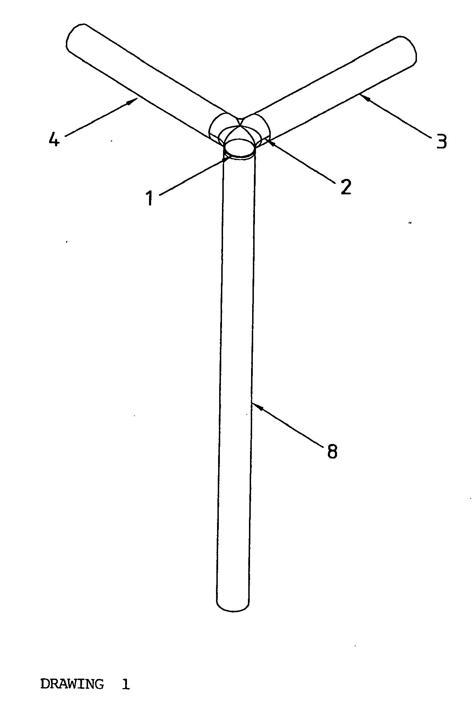

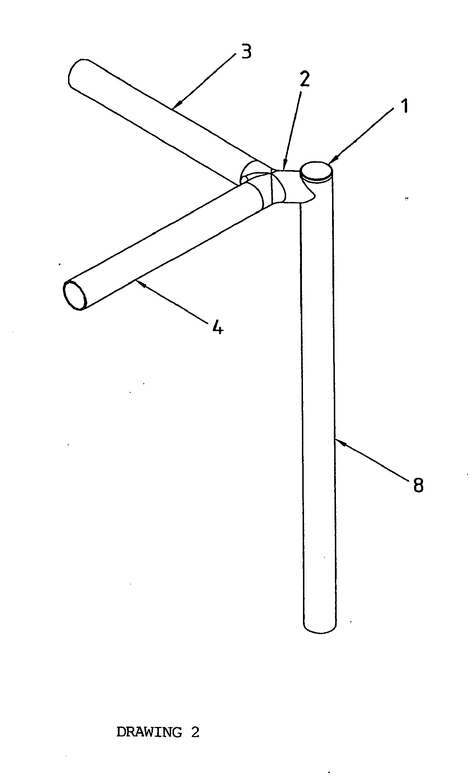

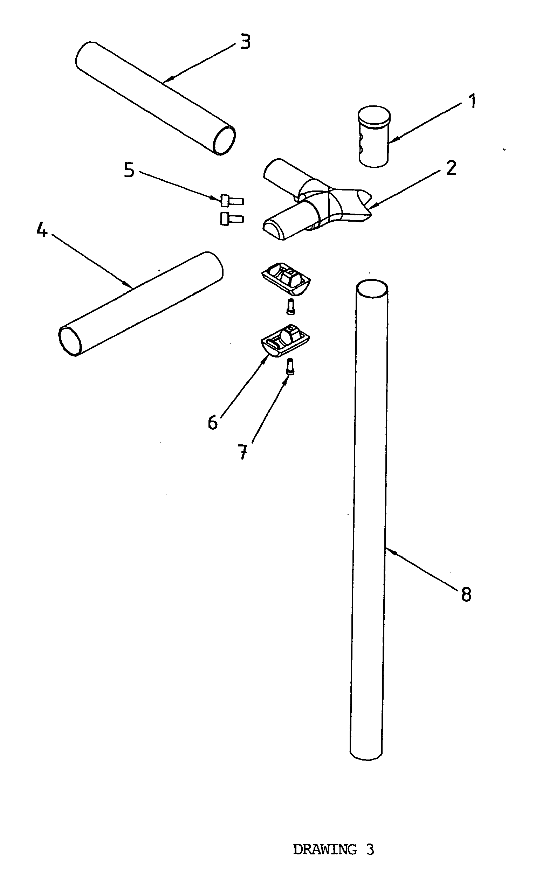

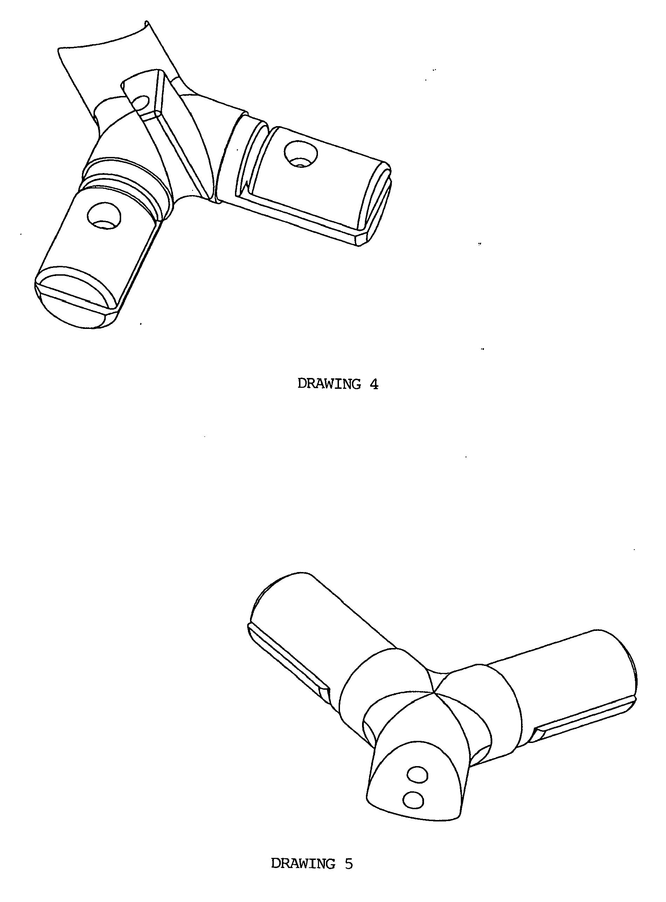

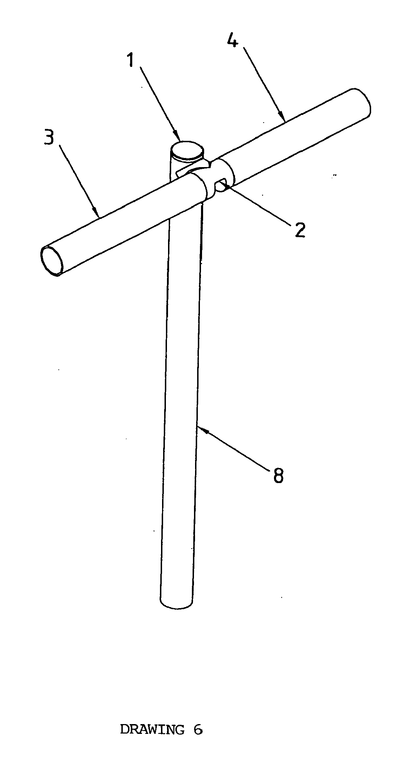

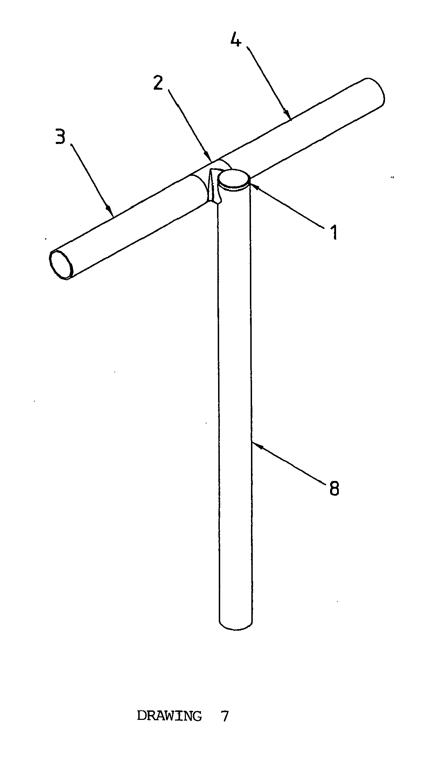

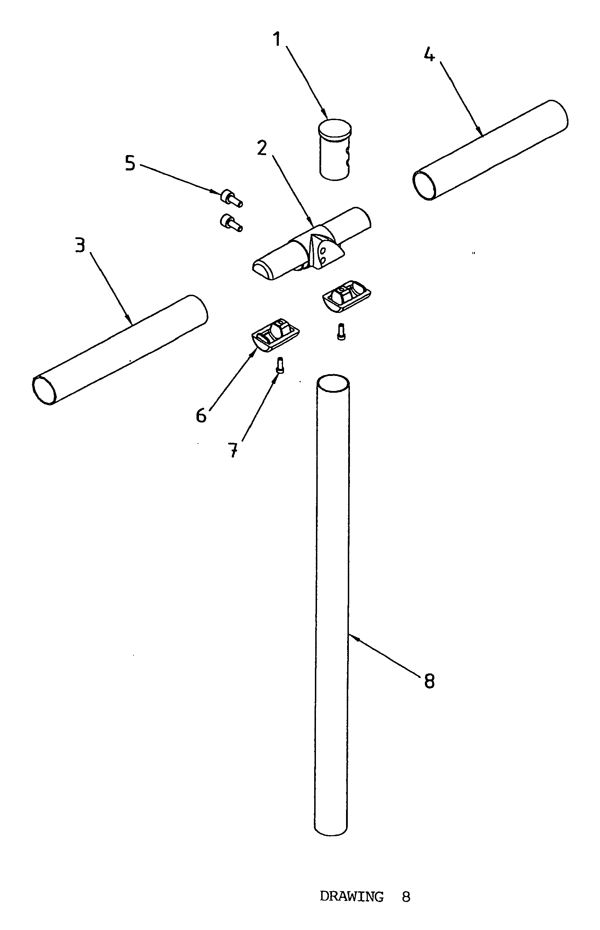

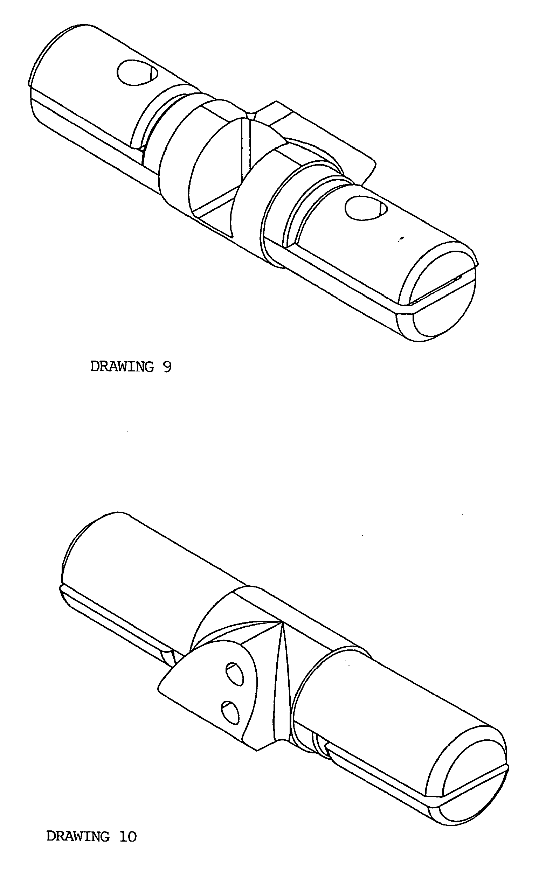

## Claims

1. The object of the invention is the connection of metal tubular parts with internal connection knot, without spot welding, so that the disassembly will be possible and easy, with accuracy, but also with no apparent connecting spots so that a perfect esthetic result is succeeded.
The connection is succeeded through the use of knot, which is in shape of «Y» or «T» and is consisted of one part in shape of «Y» or «T», two same parts in semicircle shape and one part «Cap - Base». The parts are inter connected in such a way that an accurate and steady connection is succeeded, through screws and slots, which when are added gradually are inter covered and, as a result, are not apparent.
The connection is succeeded through the placement of the part «Cap - Base» in the internal cross section of the vertical tubular part. Then the knot in shape «Y» or «T» is placed on the external diameter of the vertical tube and is screwed to the part Cap-Base. Following, the horizontal tubular parts with the two semicircle parts are incorporated in the two edges of the knot in shape «Y» or «T» and are screwed. The screws penetrate in the internal cross section of the horizontal tubular parts. The result is that there are no apparent spots indicating connection or screwing.
